# EUROPEAN PATENT APPLICATION

(11) **EP 0 588 746 A1**
(43) Date of publication of application: **23.03.1994**
(21) Application number: 93480119.2
(22) Date of filing: 24.08.1993
(51) Int. Cl.: H04B 10/00, G06F 1/10

(54) **A method of clocking integrated circuit chips**

(30) Priority: 16.09.1992 US 945477
(71) Applicant: International Business Machines Corporation, Armonk, N.Y. 10504 (US)
(72) Inventor: Shaw, Robert Reeves, Poughkeepsie, NY 12603 (US); Shen, David Tjeng-Ming, Poughkeepsie, NY 12603 (US)
(74) Representative: de Pena, Alain

(57) **Abstract**

A method of clocking integrated circuit chips. A pulsed laser (16) striking an integrated circuit module substrate (14) is diffused through the substrate and exits the opposite surface as diffused light pulses. An integrated circuit chip (10) mounted on the top surface of the substrate has at least one optical receiver (17). The optical receiver receives the pulsed energy from the diffused light pulses, converting them to electrical pulses that clock the chip.

## Description

The present invention is related generally to clocking integrated circuit chips in particular to methods of optically clocking integrated circuit chips.

Methods of electrically clocking integrated circuit chips are well known in the art. Typically, an integrated circuit chip mounted on a substrate has one or more chip pads dedicated to receiving electrical clock signals in these prior art methods. These received clock signals may be electrical signals or optical signals. A typical electrical clock signal path is: From an edge connector pin on a printed circuit board; over printed circuit wiring; through a pin on a module substrate; over substrate wiring; to a pad in a chip mounting location where solder or a wire bond provides an electrical connection between the substrate and the chip. This electrical clock signal is connected to a receiver on the chip that drives and distributes the clock on the chip.

This prior art electrical clock distribution method has several problems. First, while a clock signal may come to a single pin on the substrate from the printed circuit card, clock skew develops when the clock is distributed to different chips on the substrate, because there is a different delay for each clock path. Since each clock path has a different delay, the edges clock reach different chips at slightly different times, i.e., the clock edges are skewed. Ideally, the clock edges should be unskewed for all chips, i.e., the edges reach every module chip simultaneously. But, skew causes timing variations for different chips on the same substrate. To compensate for skew in these prior art multi-chip modules, a settling time must be added to the clock cycle skew. The settling time limits maximum clock frequency, thereby limiting performance.

Besides skew, was the complication of distributing the clock around the substrate to different chips. Usually the clock wiring is distributed on several different wiring layers. Consequently, this complicated clock wiring has a high capacitive load from the capacitance between wiring on the different layers; high inductance loading; and transmission line effects, which all exacerbate skew. Electrically distributed clocks are also sensitive to electromagnetic noise. Electromagnetic noise coupled from adjacent substrate signal lines to the clock lines could cause noise spikes large enough to produce false clock pulses. These false clock pulses may cause inadvertent changes in the chip's state. Since these pulses are inadvertent, they are hard to detect, nearly impossible to correct, and very often lead to disaster.

A second prior art approach to clock distribution is to embed optical fibers in the substrate. An optical clock signal is directed through the optical fiber to an optical receiver on the chip. The receiver converts the optical clock signal to an electrical clock signal that is distributed on the chip. Although this approach solved the skew, distribution, and electromagnetic noise problems encountered with the prior art electrical clock distribution approach, embedding optical fibers in a substrate also had drawbacks.

First, optical fibers used valuable wiring real estate. Typically, electrical wiring lands are 2 mils wide. An optical fiber is 6-12 mils. Thus, each optical fiber uses three or four wiring channels in every wiring layer it intersects. Each such intersection creates blockages in the wiring layer reducing the available wiring space. Consequently, the number of wiring layers required to wire the other signals between chips is increased. Furthermore, embedding the optical fibers in the substrate is expensive and the substrates are not reworkable.

It is the purpose of the invention to reduce clocking skew for integrated circuit chips on a substrate.

It is another purpose of the invention to improve clock distribution on a substrate having multiple integrated circuit chips.

It is another purpose of the invention to simplify clock distribution on integrated circuit chip packages.

It is a purpose of the invention to reduce integrated circuit chip clock sensitivity to electromagnetic noise.

It is another purpose of the invention to reduce the cost of clocking integrated circuit chips using an optical clocking scheme.

It is another purpose of the invention to minimize the problems for electrical real estate associated with optical clocking schemes for integrated circuit chips.

The present invention is a method of clocking integrated circuit chips mounted on a substrate. A laser is pulsed at the intended clock rate. The pulsed laser strikes the bottom surface of an integrated circuit chip package. The substrate, diffuses the laser, passing the pulses through the substrate to integrated circuit chips mounted thereon. The diffused pulses strike the integrated circuit chips activating receivers on each chip. Each receiver converts the pulsed light into electrical pulses that are the chip's clock.

In an alternate embodiment, the pulsed laser is directed at the backside of each integrated circuit chip, is diffused and broadcast therethrough, to optical receivers on the front side of the chips. The optical receivers convert the broadcasted pulses into electrical clock pulses that are transmitted to the circuits on the integrated circuit chip. In another embodiment the pulsed laser is directed at the edge of each integrated circuit chip, and broadcast through the chip to receivers on the chip's front side. The receivers convert the broadcast laser energy into electrical clock pulses for the integrated circuit chip.

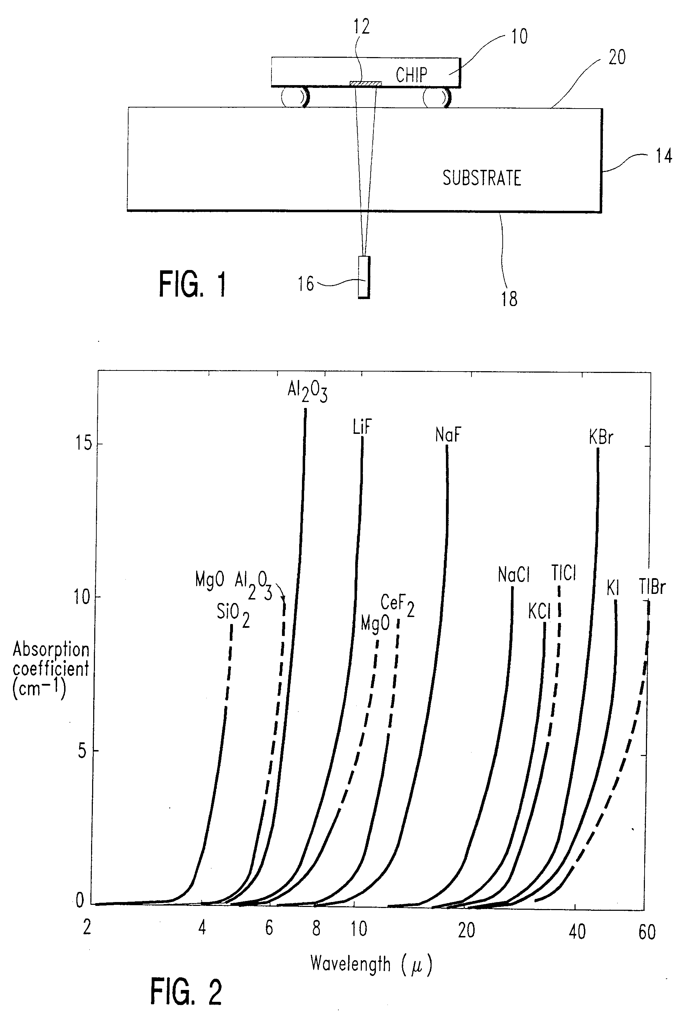

FIG. 1 is a schematic representation of the preferred embodiment of the present invention.

Figure 1 schematically represents the integrated circuit clock assembly of the preferred embodiment of the present invention. An integrated circuit chip 10 with optical receivers 12 is mounted on a top surface of a substrate 14. The substrate material may be glass ceramic or alumina (AL₂O₃). A laser 16 is pulsed, broadcasting pulses of monochromatic light at a bottom surface 18 of the substrate 14. The laser 16 is pulsed at a selected clock rate. The laser pulses striking the substrate surface are diffused through the substrate 14, penetrating the substrate 14. Diffused light emerging from the top side 20 of the substrate 14 strikes the optical receivers 12 simultaneously. Each optical receiver 12 converts the pulsed diffused light striking it to an electrical clock pulse. The clock (pulses) is (are) distributed normally to the integrated circuits on the chip 10. If more than one integrated circuit chips 10 are mounted on the substrate 14, then the diffused light pulses strike optical receivers 12 on every integrated circuit chip 10 simultaneously.

In an alternate embodiment, the pulsed monochromatic light is broadcast from the laser 16 to the backside of the integrated circuit chip 10, through the chip 10, to the optical receivers 12. In a second alternate embodiment the pulsed monochromatic light is broadcast from the laser 16 to the edge of the chip 10, diffusing into the chip 10 from the edge to the optical receivers 12.

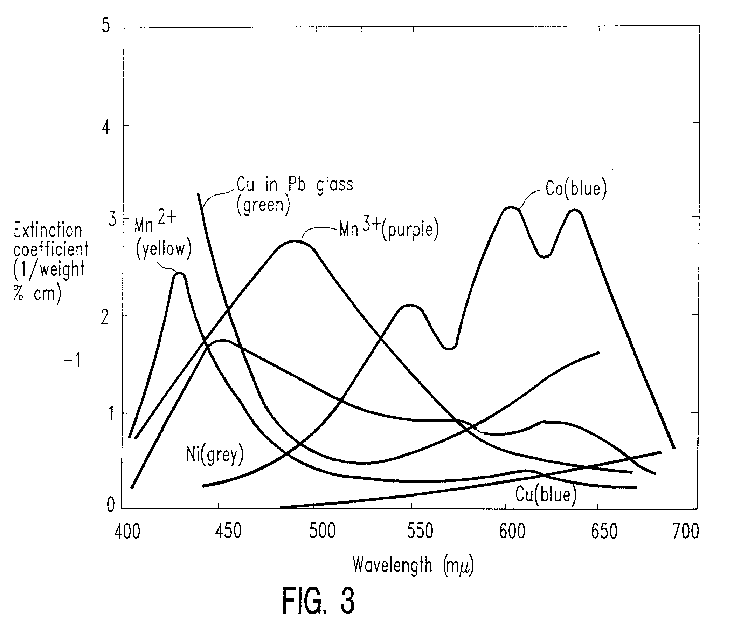

The transmission medium (substrate 14 material) must be such that enough diffused light from the pulsed laser 16 reaches the integrated circuit chips 10 and sufficient to trigger the optical receiver 12. Fig. 2 shows the absorption edges for cyrstalline substrate materials. The laser wavelength must be chosen both to pass through the substrate with acceptable loss and to match the characteristic of the optical receiver (a function of silicon junction absorption). Typically, a loss of 99.99%, or less, is sufficient to trigger the optical receiver 12 and is, therefore, acceptable. Thus, for silicon based receivers, the preferred wavelength is between 400 and 1200nm, as this wavelength has the best silicon junction absorption for triggering the receiver 12. Alumina, mullite, cordievite, and other ceramic substrates have no inherent absorption bands in this interval, and so are compatible substrate materials. Additionally, if the substrate material has a strongly absorbing dopant, the substrate will be tinted, and so, the wavelength must be selected to avoid absorption by the dopant. Fig. 3 shows the absorption (extinction coefficient) of light (wavelength) for several dopants. For a substrate material with copper dopant, for example, the wavelength should be 400-500nm.

There is not physical contact required between the laser 16 and the substrate 14. While the distance between the laser 16 and the substrate 14 is not critical, this distance should be chosen so that the laser beam dispersion is not so wide that insufficient light reaches the chip. However, it is preferred that the distance between the laser 16 and the substrate 14 be less than 1 cm. If the substrate has more than one chip 12 clocked by the laser 16, then the beam dispersion must be sufficient to irradiate all of the clocked chips.

Finally, for a substrate with very dense signal wiring, small light vias may be left open to assure that the beam penetrates the substrate 14 to provide sufficient energy to the receiver.

## Claims

1. A method of clocking at least one integrated circuit chip mounted on a substrate comprising broadcasting a pulsed laser at said substrate.

2. The method of claim 1 wherein said integrated circuit chips are on a top said substrate surface and said pulsed laser is broadcasted at a bottom said substrate surface.

3. The method of claim 1 wherein said integrated circuit chips are on a top said substrate surface and said pulsed laser is broadcasted at an edge of said substrate.

4. An integrated circuit assembly comprising:
a substrate having at least one chip location on a side for mounting an integrated circuit chip;
at least one integrated circuit chip having at least one optical receiver, said chip being mounted on said substrate in one said chip location; and
a pulsed laser broadcasting pulses at said substrate and located at a predetermined distance from said substrate.

5. The integrated circuit assembly of Claim 4 wherein said pulsed laser is located on a side of said substrate opposite said chip mounting locations.

6. The integrated circuit assembly of Claim 4 wherein said pulsed laser is broadcasting pulses at an edge of said substrate.

7. The integrated circuit assembly of claim 4 wherein said predetermined distance is less than 1 cm.

8. The integrated circuit assembly of Claim 4 wherein said substrate is comprised of a material selected in the group comprising : SiO₂, Al₂O₃, MgO.Al2O3 and MgO.

9. The integrated circuit assembly of Claim 4 further comprising a plurality of light vias in said substrate, between said pulsed laser and said integrated circuit chips.
